# EUROPEAN PATENT APPLICATION

(11) **EP 4 733 184 A1**
(43) Date of publication of application: **29.04.2026**
(21) Application number: 25209008.9
(22) Date of filing: 15.10.2025
(51) Int. Cl.: B62K 19/36

(54) **BICYCLE SEAT POST ASSEMBLY**

(30) Priority: 28.10.2024 TW 113141127
(71) Applicant: J.D Components Co., Ltd., Shou Shui Hsiang, Chang Hua Hsien 504 (TW)
(72) Inventor: FENG, PIN-CHIEH, CHANG HUA HSIEN (TW); HUANG, HSIANG-LING, CHANG HUA HSIEN, (TW)
(74) Representative: Straus, Alexander

(57) **Abstract**

A bicycle seat post assembly (10) includes an outer tube (20), an inner tube (30), an elevation device (40), and a control device (50). The inner tube (30) is movably disposed in the outer tube (20). The elevation device (40) is connected to the inner tube (30), and has a valve body (41), and a valve member (42) for controlling the open and close of the valve body (41). The control device (50) is connected to the outer tube (20). The control device (50) has a cable (51), an installation base (52), a pull bar (53), and a push bar (54). The inside of the installation base (52) has two opposite inner walls (521). Each of the two inner walls (521) is provided with an oblique guiding groove (522). The pull bar (53) is pivotably connected to the installation base (52) through a rotational axle (55). An end of the pull bar (53) is connected with an end of the cable (51), and another end is connected with the push bar (54). Two positioning portions (542) of the push bar (54) are disposed in the guiding grooves (522) of the installation base (52) respectively. As a result, the push bar (54) slides along the guiding grooves (522) upwardly and downwardly, and pushes the valve member (42) of the elevation device (40) to control the open and close of the valve body (41).

## Description

### BACKGROUND OF THE INVENTION

### 1. Field of the Invention

The present invention relates to bicycles and more particularly, to a bicycle seat post assembly which utilizes a special structural design to enable the elevation adjusting valve of the seat post to be opened or closed more smoothly, thereby improving operational convenience.

### 2. Description of the Related Art

It is well known that for adjusting the height of the bicycle seat, bicycle seat posts adjustable in height have been developed. Currently, a relatively simpler manner involves using a quick-release mechanism to secure the seat post. When adjusting the height, the user releases the quick-release lever, allowing the inner tube of the seat post to be directly pulled upward or pressed downward, thereby changing the height of the seat post. Besides, a cable-operated device or electronically controlled device can be used to control a pneumatic or hydraulic valve in the seat post. When the valve is opened, a downward pressing force can be applied to the seat to lower the seat post, or the seat post can automatically return to its original height.

Taiwan Patent Publication No. M619009 disclosed a pneumatic height adjusting mechanism for a bicycle seat post. When the cable is pulled, a linkage set is driven to generate an upward movement to push a touch end of a top shaft, causing a push end of the top shaft to upwardly push a valve stem, thereby opening the valve and allowing the height of the seat post to be adjusted. Taiwan Patent Publication No. I638740 disclosed a bicycle seat post elevation device. By turning a control lever on the bicycle handlebar, a push block can be controlled to push an eccentric plate to deviate, causing an operation end to push a striking pin to compress a spring upwardly, thereby making a valve plate leave the valve opening, such that the height of the seat can be adjusted.

These patents involve the configuration design using a cable to move a linkage mechanism. When the linkage mechanism is driven, it firstly deflects outwards and then moves upwards, creating an arc-shaped movement path. Because the valve stem is in continuous contact with the linkage mechanism, an interference or jamming problem occurs when the linkage mechanism deflects outwards. That means the force pulling the cable cannot be linearly transmitted to the valve stem. Therefore, during the operation, the rider needs to apply a greater force to pull the cable to compensate for the outward deflection force of the linkage mechanism. However, this manner is liable to cause wear to the cable and the linkage mechanism, and after that, an even greater force is required to operate the linkage mechanism. Therefore, the inventor sought to develop a control mechanism that can avoid interference, so as to achieve a linear force transmission.

### SUMMARY OF THE INVENTION

In view of the fact that the aforementioned existing bicycle seat posts still have many shortcomings, it is a primary objective of the present invention to provide a bicycle seat post assembly which allows a control mechanism to linearly transmit force, thereby convenient for the rider to adjust the seat height.

To attain the above primary objective, the present invention provides a bicycle seat post assembly which includes an outer tube, an inner tube, an elevation device, and a control device. The inner tube is upwards and downwards movably disposed in the outer tube. The elevation device is connected to the inner tube. The elevation device has a valve body and a valve member. The valve member is adapted to control the open and close of the valve body. The control device is connected to the outer tube. The control device has a cable, an installation base, a pull bar, and a push bar. The inside of the installation base has two opposite inner walls. Each of the two inner walls is provided with an oblique guiding groove. The guiding groove and the bottom side of the installation base have an included angle therebetween, and the included angle at a head end of the guiding groove is larger than 90°. The pull bar is pivotably connected to the installation base through a rotational axle. An end of the pull bar is connected with an end of the cable. Another end of the pull bar is connected with the push bar. Two positioning portions of the push bar are disposed in the guiding grooves of the installation base respectively, allowing the push bar to slide upwardly along the guiding grooves from the head ends of the guiding grooves with the included angle larger than 90° so as to make a top surface of the push bar push the valve member of the elevation device.

By the above-described technical features, during the actual operation, the rider can use the control device to easily control the open or close of the valve body of the elevation device. The control device is provided with the guiding grooves, and the guiding grooves are provided on the installation base obliquely at an angle. This oblique configuration design corresponds to the movement path of the push bar driven by the pull bar, allowing the outward arc-shaped deflection caused by the end of the pull bar connected with the push bar to be corrected to straight displacement. This configuration design with the guiding grooves can prevent the movement path of the control device from an interference situation.

Preferably, the pull bar of the control device has a recess, and the push bar has a protrusion. The pull bar is connected with the push bar in a way that the protrusion is accommodated in the recess. In this way, the recess of the pull bar helps to secure the push bar in place, preventing the push bar from shifting, and also transmitting the force of the moving pull bar to the push bar more completely.

Preferably, the included angle is larger than 90°, and smaller than or equal to 105°. In this way, the included angle is ranged from 90° to 105°, and at least larger than 90°. If the included angle is larger than 105°, it makes applying force more difficult. If the included angle is smaller than or equal to 90°, the interference problem still exists.

Preferably, the included angle gradually decreases from the head end to a tail end of the guiding groove. In this way, the gradually decreasing of the oblique angle can gradually change the direction of the movement path of the push bar to turn the last section of the movement path upward vertically to the valve member.

Preferably, the guiding groove of the control device has a first guiding section, and a second guiding section connected with the first guiding section. The first guiding section and the bottom side of the installation base have an included angle larger than 90°. The second guiding section has another included angle with respect to the bottom side of the installation base, and the included angle of the second guiding section equals to 90°. In this way, the movement of the push bar gradually changes from oblique displacement to vertical displacement, so that in the last section of the movement, the push bar directly pushes the valve member upwards. The pushing force is perpendicular to the contact surface of the push bar and the valve member, that makes the force transmitted to the valve member even more completely.

Preferably, the installation base, the pull bar and the push bar of the control device are made of plastic. That can lower the manufacturing cost of the control device, and achieve a lightweight effect.

Preferably, the pull bar of the control device has two hook portions, and a through groove provided between the two hook portions. An end of the cable has a bun portion. The cable is inserted through the through groove in a way that the bun portion is engaged with the two hook portions of the pull bar. In this way, the cable is secured to the pull bar through the bun portion, that makes the cable firmly secured to the hook portions of the pull bar even after a long-term use.

To attain the above primary objective, the present invention provides another bicycle seat post assembly which includes an outer tube, an inner tube, an elevation device, and a control device. The inner tube is upwards and downwards movably disposed in the outer tube. The elevation device is connected to the inner tube. The elevation device has a valve body and a valve member. The valve member is adapted to control the open and close of the valve body. The control device is connected to the outer tube. The control device has a cable, an installation base, a pull bar, and a push bar. The inside of the installation base has two opposite inner walls, and two positioning portions provided on the two inner walls respectively. The push bar has two oblique guiding grooves. The guiding groove and a horizontal axis have an included angle therebetween, and the included angle is larger than 90° at a head end of the guiding groove. The pull bar is pivotably connected to the installation base through a rotational axle. An end of the pull bar is connected with an end of the cable. Another end of the pull bar is connected with the push bar. The two positioning portions of the installation base are disposed in the guiding grooves of the push bar respectively, allowing the push bar to slide upwardly with the included angle larger than 90° along the two positioning portions so as to make a top surface of the push bar push the valve member of the elevation device.

In this another bicycle seat post assembly, the guiding grooves are provided on the push bar, and the positioning portions are provided on the installation base. That also allows the outward arc-shaped deflection caused by the end of the pull bar connected with the push bar to be corrected to straight displacement, so as to prevent the movement path of the control device from an interference situation.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

FIG. 1 is a perspective view of a bicycle seat post assembly of the present invention, also showing a part of a bicycle handlebar.
FIG. 2 is an exploded perspective view of the bicycle seat post assembly of the present invention, also showing an enlarged view of a pull bar and a push bar.
FIG. 3 is a perspective view of a control device of the present invention, showing the combination of an installation base, the pull bar and the push bar of a first embodiment.
FIG. 4 is a sectional view of the installation base of the control device of the present invention, showing an oblique guiding groove of the first embodiment.
FIG. 5 is a sectional view of an elevation device and the control device of the present invention, showing a closed valve position thereof.
FIG. 6 is a sectional view of the elevation device and the control device of the present invention, showing an opened valve position thereof.
FIG. 7 is a sectional view of the installation base of the control device of the present invention, showing the implemented configuration that the guiding groove has a second guiding section.
FIG. 8 is a planar view of a pull bar of the present invention, showing the appearance of the pull bar of a second embodiment.
FIG. 9 is a perspective view of an installation base of the present invention, showing positioning portions of the installation base of the second embodiment.

### DETAILED DESCRIPTION OF THE INVENTION

First of all, it is to be mentioned that same or similar reference numerals used in the following embodiments and the appendix drawings designate same or similar elements or the structural features thereof throughout the specification for the purpose of concise illustration of the present invention. It should be noticed that for the convenience of illustration, the components and the structure shown in the figures are not drawn according to the real scale and amount, and the features mentioned in each embodiment can be applied in the other embodiments if the application is possible in practice. Besides, when it is mentioned that an element is disposed on another element, it means that the former element is directly disposed on the latter element, or the former element is indirectly disposed on the latter element through one or more other elements between aforesaid former and latter elements. When it is mentioned that an element is directly disposed on another element, it means that no other element is disposed between aforesaid former and latter elements.

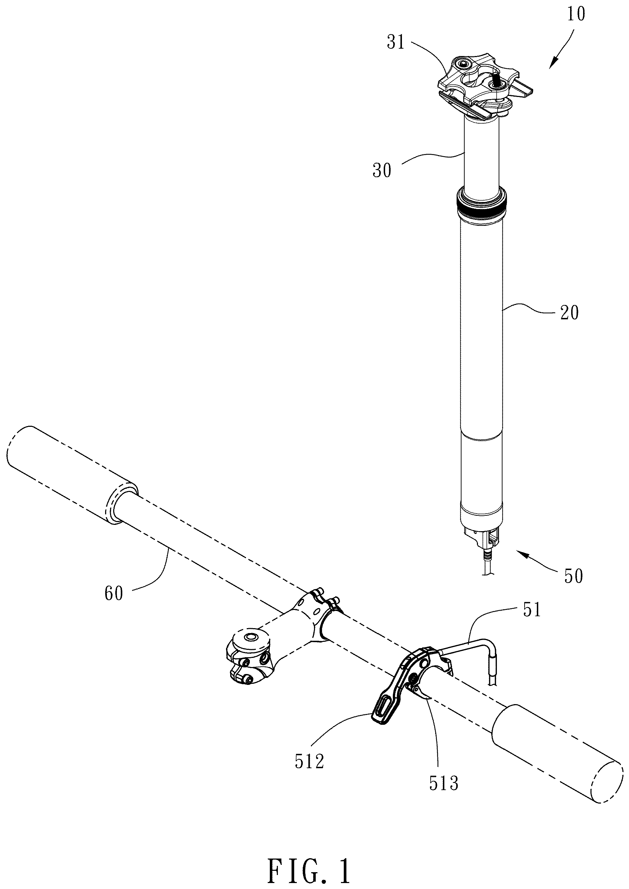

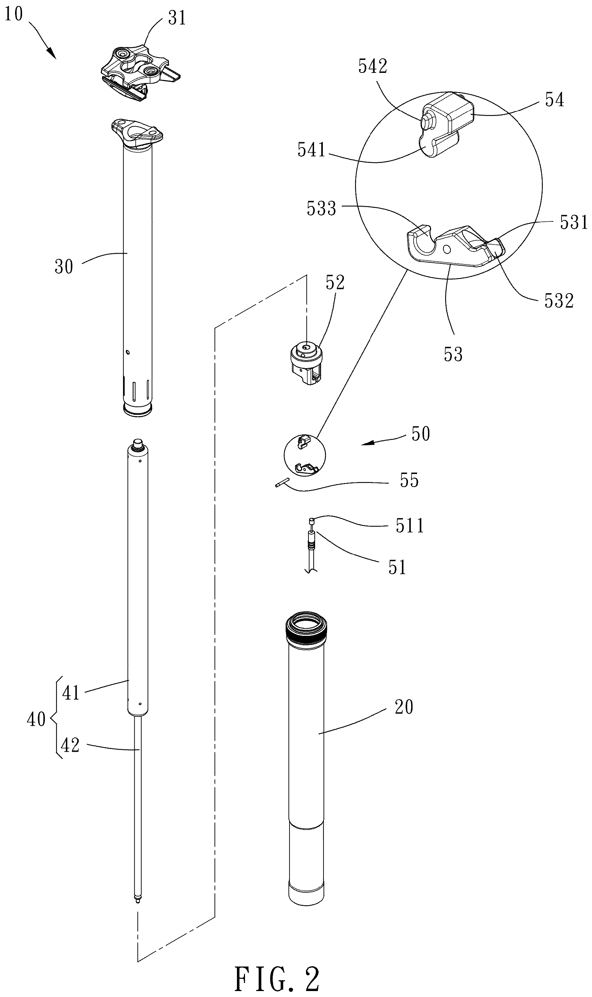

Referring to FIG. 1 to FIG. 4, a bicycle seat post assembly 10 of the present invention primarily includes an outer tube 20, an inner tube 30, an elevation device 40, and a control device 50.

The inner tube 30 is inserted in the outer tube 20. The inner tube 30 is assembled at the top end thereof with a seat securing base 31. The bottom end of the inner tube 30 is connected to the outer tube 20. When the elevation device 40 is opened, the inner tube 30 can be adjusted in elevation in a way that the inner tube 30 is moved upwards or downwards along the outer tube 20.

The elevation device 40 is connected to the inner tube 30. The elevation device 40 has a valve body 41 and a valve member 42. The valve body 41 is disposed in the inner tube 30. The top end of the valve member 42 is upwards and downwards movably inserted in the valve body 41. The valve member 42 is adapted to control the open and close of the valve body 41. The valve body 41 has at least two oil chambers (not shown) or gas chambers (not shown) for fluid to flow therein. When the valve body 41 is opened, the fluid is allowed to flow between different oil chambers or gas chambers, thereby attaining the objective of changing the height of the inner tube 30.

The control device 50 is connected to the outer tube 20. The control device 50 has a cable 51, an installation base 52, a pull bar 53, and a push bar 54.

An end of the cable 51 has a bun portion 511, and the other end has a control lever 512. The control lever 512 is pivotably connected to a clamp 513, and the clamp 513 is fastened to a bicycle handlebar 60. The rider can use fingers thereof to operate the control lever 512.

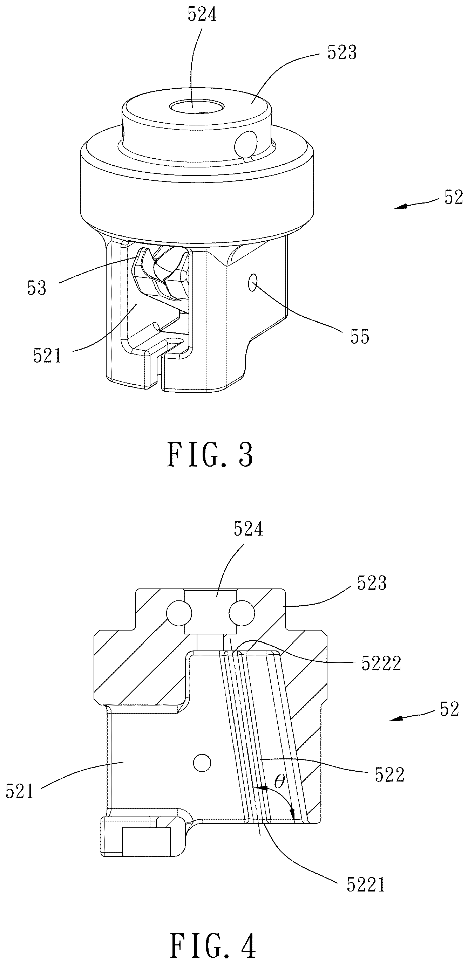

The inside of the installation base 52 has two opposite inner walls 521. A space is formed between the two inner walls 521 for accommodating the pull bar 53 and the push bar 54. Each of the two inner walls 521 is provided with a guiding groove 522. The guiding groove 522 extends from the bottom side of the inner wall 521 to the top side of the inner wall 521, and obliques at an angle with respect to the bottom side of the installation base 52, so that the guiding groove 522 is presented obliquely on the inner wall 521. In this way, the guiding groove 522 and the bottom side of the installation base 52 have an included angle θ therebetween (as shown in FIG. 4), and the included angle θ at the head end of the guiding groove 522 is larger than 90° and smaller than or equal to 105°. With the extending of the guiding groove 522 from the head end 5221 to the tail end 5222, the included angle may gradually decrease. The top end of the installation base 52 has a combining portion 523, and a through hole 524 penetrating through the combining portion 523. The combining portion 523 of the installation base 52 is combined to the inside of the bottom end of the outer tube 20, and the bottom end of the valve member 42 is inserted through the through hole 524 to contact the push bar 54.

The pull bar 53 is pivotably connected to the installation base 52 through a rotational axle 55. An end of the pull bar 53 has two hook portions 531, and a through groove 532 provided between the two hook portions 531. The cable 51 is inserted through the through groove 532 of the pull bar 53 in a way that the bun portion 511 is engaged with the two hook portions 531, so that when the cable 51 is pulled, it is still firmly secured to the pull bar 53. Another end of the pull bar 53 is connected with the push bar 54. This end may be directly formed as a plane and in contact with the push bar 54, or combined with the push bar 54 in a fastening manner with a pin. In this embodiment, the pull bar 53 is formed with a recess 533, and the push bar 54 is formed with a protrusion 541 corresponding to the recess 533 of the pull bar 53. The protrusion 541 is accommodated in the recess 533. The recess 533 of the pull bar 53 helps to secure the push bar 54 in place, preventing the push bar 54 from shifting during the movement, and also transmitting the force of the moving pull bar 53 to the push bar 54 more completely. Furthermore, there is no need to provide the pull bar 53 and the push bar 54 with additional holes for securing a pin, thereby simplifying the assembly process.

Two sides of the push bar 54 are each formed with a positioning portion 542. The two positioning portions 542 are disposed in the two guiding grooves 522 of the installation base 52 respectively, allowing the push bar 54 to slide in the installation base 52 along the guiding grooves 522 to make the top surface of the push bar 54 contact the valve member 42 of the elevation device 40. In addition, the installation base 52, the pull bar 53 and the push bar 54 of the control device 50 in this embodiment are all made of plastic, and manufactured by injection molding. In this way, compared with the metallic control device 50, the control device 50 made of plastic is much lower in manufacturing cost, and can achieve a lightweight effect, thereby suitable for the application to related components to bicycles.

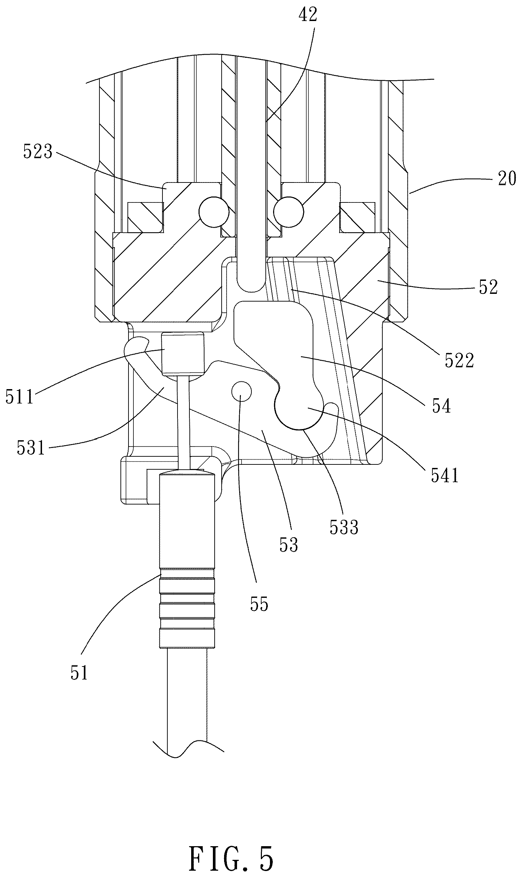

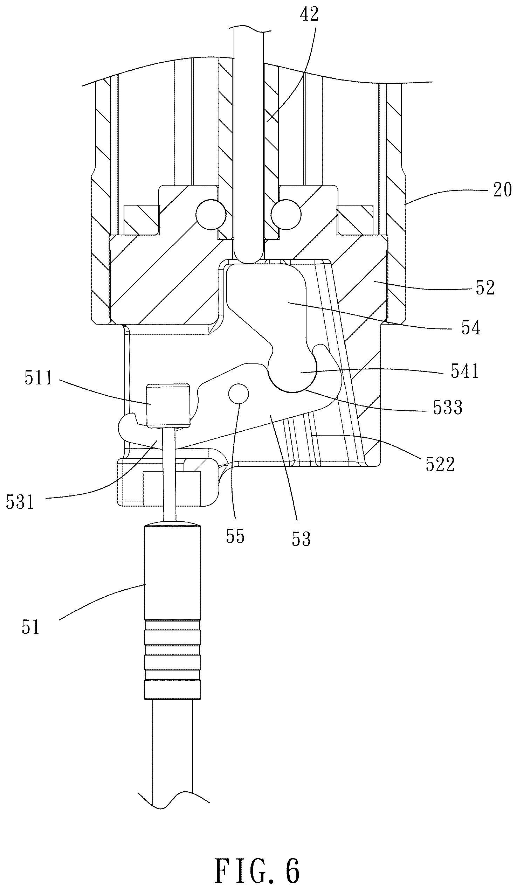

Referring to FIG. 5 and FIG. 6, when the rider wants to adjust the seat height, the rider presses the control lever 512 on the bicycle handlebar 60. The control lever 512 drives the cable 51, making the cable 51 pulled and moved, so that the bun portion 511 is dragged and moved. Because the pull bar 53 is pivotably connected to the installation base 52 through the rotational axle 55, a lever mechanism is formed with the rotational axle 55 serving as the fulcrum. The movement of the bun portion 511 turns the pull bar 53 downwards. The end of the pull bar 53 connected with the push bar 54 is turned upwardly, and moves the push bar 54 to make it lift. The movement path of the push bar 54 is restricted by the guiding grooves 522 of the installation base 52. Therefore, the push bar 54 is moved in a way that the two positioning portions 542 slides along the guiding grooves 522. The guiding groove 522 is configured extending along an oblique straight line. When the push bar 54 is lifted, the oblique guiding grooves 522 provide a smooth movement path to correct the outward arc-shaped deflection caused by the end of the pull bar 53 connected with the push bar 54 to straight displacement. Therefore, the pull bar 53 and the push bar 54 are prevented from being interfered during the movement, and the force pulling the cable is relatively more directly and linearly transmitted to the valve member 42 of the elevation device 40, making it easy to push the valve member 42 to move.

The included angle between the guiding groove 522 and the installation base 52 may gradually decrease from the head end to the tail end of the guiding groove 522, such that with the push bar 54 being moved along the guiding grooves 522 to the highest point, the movement path of the push bar 54 turns into upward displacement. For example, the included angle may decrease from 105° to 95°. When the push bar 54 reaches the highest point, the top surface thereof directly pushes the valve member 42 of the elevation device 40. The valve member 42 is displaced upwardly in the valve body 41 to make two oil chambers or gas chambers in the valve body 41 communicate with each other. At this time, the valve body 41 is in an opened valve status, and the inner tube 30 can be moved upwardly or downwardly relative to the outer tube 20. In this way, the rider can directly apply a downward pressing force to the seat (not shown) in the riding process, so as to lower the seat height. If the rider leaves the seat, the seat will automatically lift to the original height.

When the seat is adjusted to an appropriate height, the rider releases the control lever 512 on the bicycle handlebar 60 to remove the force dragging the cable 51. The fluid in the valve body 41 of the elevation device 40 presses the valve member 42 downwardly, making the two oil chambers or gas chambers in the valve body 41 not communicate with each other. At this time, the valve body 41 is in a closed valve status, and the inner tube 30 is fixed and cannot be moved upwardly or downwardly. The valve member 42 pushes the push bar 54 reversely, and the push bar 54 moves downwardly and obliquely along the guiding grooves 522. With the movement of the push bar 54, the protrusion 541 of the push bar 54 presses the recess 533 of the pull bar 53 downwardly to turn the pull bar 53 about the rotational axle 55 connected to installation base 52. The end of the pull bar 53 connected with the push bar 54 is turned downwardly, and the other end of the pull bar 53 engaged with the bun portion 511 is turned upwardly, such that the well-adjusted seat height is fixed.

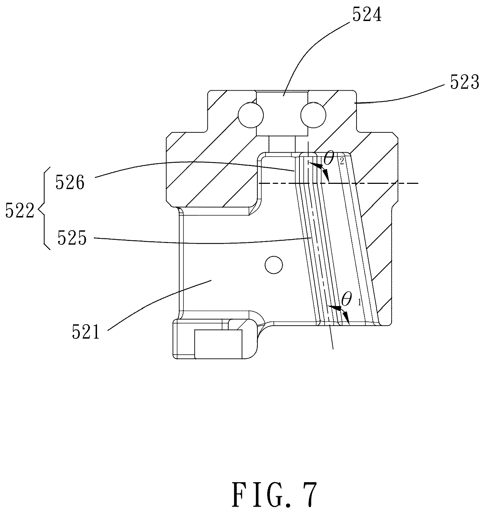

The guiding groove 522 of the installation base 52 of the control device 50 may have an oblique first guiding section 525, and a second guiding section 526 formed at the top end of the first guiding section 525, as shown in FIG. 7. The first guiding section and the bottom side of the installation base have an included angle θ₁ therebetween, and the included angle θ₁ is larger than 90°. For example, the included angle θ₁ may be 105°. The second guiding section has another included angle θ₂ with respect to the bottom side of the installation base, and the included angle θ₂ equals to 90°. The second guiding section 526 is located at the top side of the inner wall 521. Because the push bar 54 is primarily disposed to push the valve member 42 of the elevation device 40 upwardly, the guiding groove 522 is added with the second guiding section 526 as the last section thereof. That makes the movement of the push bar 54 change from the oblique movement along the first guiding section 525 to the completely upward movement along the second guiding section 526. That makes the push bar 54 directly push the valve member 42 upwards in the last section of the movement, making the pushing force perpendicular to the contact surface of the push bar 54 and the valve member 42, facilitating the force to be transmitted to the valve member 42 more completely.

The above-described bicycle seat post assembly 10 is a first embodiment. The present invention further provides a second embodiment, which is structurally different from the first embodiment in the control device 50. The structures of the outer tube 20, the inner tube 30 and the elevation device 40 of the second embodiment are all the same with those of the first embodiment, thereby not repeatedly described hereinafter.

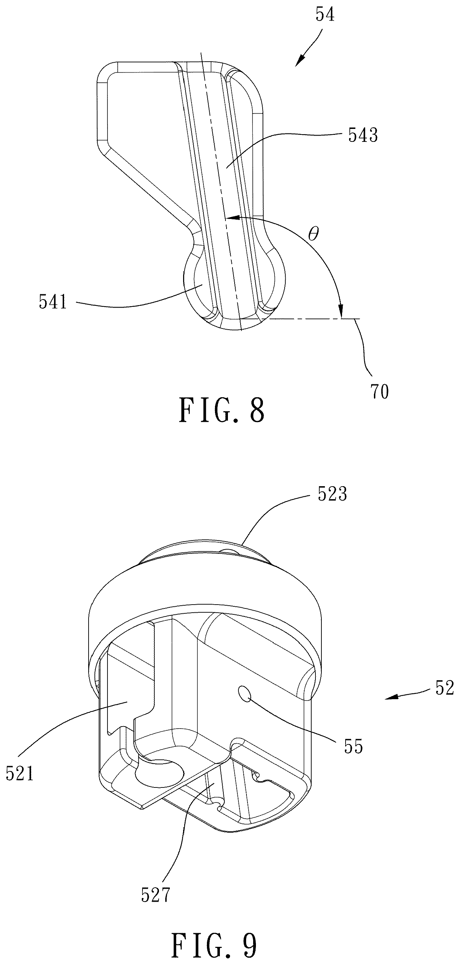

Referring to FIG. 8 and FIG. 9, the control device 50 in the second embodiment has two positioning portions 527 provided on two inner walls 521 of the installation base 52 respectively. The positioning portion 527 is an elongated protrusion. The push bar 54 is provided on two sides thereof with two guiding grooves 543 respectively. The guiding groove 543 and a horizontal axis have an included angle θ therebetween, and the included angle θ at the head end of the guiding groove 543 is larger than 90° and smaller than or equal to 105°. Because the push bar 54 is formed at the bottom thereof with a protrusion 541, the imaginary horizontal axis 70 is used to serve as the reference line of the included angle θ. The two guiding grooves 543 of the push bar 54 are sleeved onto the two positioning portions 527 of the installation base 52 respectively, so that when the push bar 54 is moved along with the pull bar 53, the guiding grooves 543 slide along the positioning portions 527 in the installation base 52, and the valve member 42 of the elevation device 40 is pushed to open the valve, or the valve member 42 of the elevation device 40 presses the push bar 54 downwardly and thereby close the valve.

The second embodiment also uses an oblique design to restrict the movement path of the pull bar 53 and the push bar 54, allowing the outward arc-shaped deflection caused by the end of the pull bar 53 connected with the push bar 54 to be corrected to straight displacement. The configuration design of the guiding grooves 543 of the push bar 54 can prevent the movement path of the control device 50 from an interference situation.

In summary, the bicycle seat post assembly provided by the present invention has at least the following advantages when compared with the conventional technique.
1. In the bicycle seat post assembly 10 of the present invention, the installation base 52 or the push bar 54 of the control device 50 is provided with guiding grooves 522 or 543, and the guiding grooves 522 or 543 are oblique at an angle. That makes the movement path of the push bar 54 driven by the pull bar 53 more smooth, and effectively modifies the outward deflection situation at the beginning of the movement of the pull bar 53 and the push bar 54, thereby preventing the pull bar 53 and the push bar 54 from being interfered on the movement path, and allowing the force to be transmitted to the valve member 42 completely, so as to reduce the force the rider needs to apply to operate the control device 50.
2. The bicycle seat post assembly 10 of the present invention uses the control device 50 to control the open and close of the valve body 41 of the elevation device 40. When the valve body 41 is opened, the rider can perform the adjustment of lifting or lowering the inner tube 30, so as to change the seat height. In this way, the rider can quickly adjust the seat to an appropriate height for riding the bicycle with a correct and effective posture.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A bicycle seat post assembly (10), the bicycle seat post assembly (10) being **characterized in** comprising:
an outer tube (20);
an inner tube (30) upwards and downwards movably disposed in the outer tube (20);
an elevation device (40) connected to the inner tube (30), the elevation device (40) having a valve body (41) and a valve member (42), the valve member (42) controlling open and close of the valve body (41); and
a control device (50) connected to the outer tube (20), the control device (50) having a cable (51), an installation base (52), a pull bar (53), and a push bar (54), an inside of the installation base (52) having two opposite inner walls (521), each of the two inner walls (521) being provided with an oblique guiding groove (522), the guiding groove (522) and a bottom side of the installation base (52) having an included angle (θ) therebetween, the included angle (θ) at a head end (5221) of the guiding groove (522) being larger than 90°, the pull bar (53) being pivotably connected to the installation base (52) through a rotational axle (55), an end of the pull bar (53) being connected with an end of the cable (51), another end of the pull bar (53) being connected with the push bar (54), two positioning portions (542) provided on two sides of the push bar (54) being disposed in the guiding grooves (522) of the installation base (52) respectively, allowing the push bar (54) to slide upwardly along the guiding groove (522) from the head end (5221) of the guiding groove (522) with the included angle (θ) larger than 90° so as to make a top surface of the push bar (54) push the valve member (42) of the elevation device (40).

2. The bicycle seat post assembly (10) as claimed in claim 1, which is **characterized in that** the pull bar (53) of the control device (50) has a recess (533); the push bar (54) has a protrusion (541); the pull bar (53) is connected with the push bar (54) in a way that the protrusion (541) is accommodated in the recess (533).

3. The bicycle seat post assembly (10) as claimed in claim 1 or 2, which is **characterized in that** the included angle (θ) is larger than 90°, and smaller than or equal to 105°.

4. The bicycle seat post assembly (10) as claimed in anyone of claims 1-3, which is **characterized in that** the included angle (θ) gradually decreases from the head end (5221) to a tail end (5222) of the guiding groove (522).

5. The bicycle seat post assembly (10) as claimed in claim 1 or 2, which is **characterized in that** the guiding groove (522) of the control device (50) has a first guiding section (525), and a second guiding section (526) connected with the first guiding section (525); the first guiding section (525) and the bottom side of the installation base (52) have an included angle (θ₁) larger than 90°; the second guiding section (526) has another included angle (θ₂) with respect to the bottom side of the installation base (52), and the included angle (θ₂) of the second guiding section (526) equals to 90°.

6. The bicycle seat post assembly (10) as claimed in anyone of claims 1-5, which is **characterized in that** the installation base (52), the pull bar (53) and the push bar (54) of the control device (50) are made of plastic.

7. The bicycle seat post assembly (10) as claimed in anyone of claims 1-6, which is **characterized in that** the pull bar (53) of the control device (50) has two hook portions (531), and a through groove (532) provided between the two hook portions (531); said an end of the cable (51) has a bun portion (511); the cable (51) is inserted through the through groove (532) in a way that the bun portion (511) is engaged with the two hook portions (531) of the pull bar (53).

8. A bicycle seat post assembly (10), the bicycle seat post assembly (10) being **characterized in** comprising:
an outer tube (20);
an inner tube (30) upwards and downwards movably disposed in the outer tube (20);
an elevation device (40) connected to the inner tube (30), the elevation device (40) having a valve body (41) and a valve member (42), the valve member (42) controlling open and close of the valve body (41); and
a control device (50) connected to the outer tube (20), the control device (50) having a cable (51), an installation base (52), a pull bar (53), and a push bar (54), an inside of the installation base (52) having two opposite inner walls (521), and two positioning portions (527) provided on the two inner walls (521) respectively, the push bar (54) having two oblique guiding grooves (543), the guiding groove (543) and a horizontal axis (70) having an included angle (θ) therebetween, the included angle (θ) being larger than 90° at a head end of the guiding groove (543), the pull bar (53) being pivotably connected to the installation base (52) through a rotational axle (55), an end of the pull bar (53) being connected with an end of the cable (51), another end of the pull bar (53) being connected with the push bar (54), the two positioning portions (527) of the installation base (52) being disposed in the guiding grooves (543) of the push bar (54) respectively, allowing the push bar (54) to slide upwardly with the included angle (θ) larger than 90° along the two positioning portions (527) so as to make a top surface of the push bar (54) push the valve member (42) of the elevation device (40).

9. The bicycle seat post assembly (10) as claimed in claim 8, which is **characterized in that** the pull bar (53) of the control device (50) has a recess (533); the push bar (54) has a protrusion (541); the pull bar (53) is connected with the push bar (54) in a way that the protrusion (541) is accommodated in the recess (533).

10. The bicycle seat post assembly (10) as claimed in claim 8 or 9, which is **characterized in that** the included angle (θ) is larger than 90°, and smaller than or equal to 105°.

11. The bicycle seat post assembly (10) as claimed in anyone of claims 8-10, which is **characterized in that** the installation base (52), the pull bar (53) and the push bar (54) of the control device (50) are made of plastic.

12. The bicycle seat post assembly (10) as claimed in anyone of claims 8-11, which is **characterized in that** the pull bar (53) of the control device (50) has two hook portions (531), and a through groove (532) provided between the two hook portions (531); said an end of the cable (51) has a bun portion (511); the cable (51) is inserted through the through groove (532) in a way that the bun portion (511) is engaged with the two hook portions (531) of the pull bar (53).
